# EUROPEAN PATENT SPECIFICATION

(11) **EP 1 570 127 B1**
(45) Date of publication and mention of the grant of the patent: **01.08.2012**
(21) Application number: 03809768.9
(22) Date of filing: 22.10.2003
(51) Int. Cl.: D21H 17/68, C01B 39/02

(54) **STABILISED ALUMINOSILICATE SLURRIES**
STABILISIERTE ALUMINOSILICATSUSPENSIONEN
SUSPENSIONS D'ALUMINOSILICATE STABILISEES

(30) Priority: 30.10.2002 GB 0225177
(43) Date of publication of application: 07.09.2005
(73) Proprietor: PQ Silicas UK Limited, Cheshire WA5 1AQ (GB)
(72) Inventor: TOFT, Alexis John, Cheshire WA4 2SZ (GB); STEBBING, Simon Richard, Warrington WA2 OWL (GB); ELLISON, Stephen George, Cheshire WA5 5LX (GB)
(74) Representative: Collingwood, Anthony Robert
(86) International application number: PCT/GB2003/004593
(87) International publication number: WO 2004/040061

(56) References cited:
- EP-A- 0 384 070
- EP-A- 0 565 364
- WO-A-01/94512
- DATABASE WPI Section Ch, Week 198628 Derwent Publications Ltd., London, GB; Class F09, AN 1986-178224 XP002271505 & JP 61 097499 A (ASAHI GLASS CO LTD), 15 May 1986 (1986-05-15)
- DATABASE WPI Section Ch, Week 199550 Derwent Publications Ltd., London, GB; Class A97, AN 1995-390591 XP002271506 & JP 07 268400 A (LION CORP), 17 October 1995 (1995-10-17)
- DATABASE WPI Section Ch, Week 199420 Derwent Publications Ltd., London, GB; Class H04, AN 1994-163245 XP002271507 & JP 06 106064 A (COSMO OIL CO LTD), 19 April 1994 (1994-04-19)
- DATABASE WPI Section Ch, Week 198621 Derwent Publications Ltd., London, GB; Class E33, AN 1986-134059 XP002271508 & JP 61 070098 A (ASAHI GLASS CO LTD), 10 April 1986 (1986-04-10)

## Description

This invention relates to aqueous slurries of crystalline aluminosilicates and in particular to crystalline aluminosilicate slurries having controlled rheological properties.

Crystalline aluminosiicates, or zeolites, have found use as fillers in such applications as the manufacture of paper. For such use, it is convenient to transport the zeolite in bulk in the form of an aqueous slurry. Particularly useful aqueous zeolite slurries having a relatively low pH value and containing a multivalent salt in addition to the zeolite are described in PCT application published as WO 01/94512. These slurries are stable and do not settle on standing but, because they have a lightly gelled structure, they can sometimes be difficult to fully discharge from a vessel.

An object of this invention is to provide a modified version of such a slurry having a structure which is resistant to settling but is readily capable of being discharged from a vessel.

According to the invention, an aqueous slurry comprises
(a) a crystalline aluminosilicate represented by the empirical formula

   M_{2/n}O · Al₂O₃ · xSiO₂ · yH₂O

   Wherein M represents a first metal moiety, said first metal having a valency of n. x indicates the ratio of molecules of silica to molecules of alumina and y indicates the ratio of molecules of water to molecules of alumina.
(b) a salt of a second metal selected from the group consisting of Group III metals, metallic elements of Group IV, magnesium, titanium, chromium, iron, nickel, copper, zinc, zirconium and silver, said salt of a second metal being present in an amount which is sufficient to replace from about 2.0 to about 40 per cent by weight of the first metal moiety, and
(c) particular silica having a BET surface area greater than 500 m²/g and a pore volume, as measured by nitrogen manometry of less than 2.1 cm³/g.

The above form of empirical formula is used for simplicity in expressing the molar ratios of the components, but it can been seen that the ratio of Si atoms to Al atoms in this formula is equal to x/2 and the ratio of water molecules to Al atoms is equal to y/2.

The first metal M can be any metal capable of forming a crystalline aluminosilicate structure having the above empirical formula. Preferably, M is an alkali metal and the preferred alkali metal is sodium.

The crystalline aluminosilicates used in the invention are usually known as zeolites and can have the structure of any of the known zeolites. The structure and characteristics of many zeolites are described in the standard work "Zeolite Molecular Sieves" by Donald W. Breck, published by Robert E. Krieger Publishing Company. The value of x in the above empirical formula is in the range 1.5 to 10. The value of y, which represents the amount of water contained in the voids of the zeolite, can vary widely. In anhydrous material y=0 and, in fully hydrated zeolites, y is typically up to 5. The value of y for the zeolite of the invention is from 0 up to 5.

Zeolites used in this invention may be based on naturally-occurring or synthetic aluminosilicates and the preferred forms of zeolite have the structure known as zeolite P, zeolite X or zeolite A. Particularly preferred forms of zeolite are those disclosed in EP-A-0 384 070, EP-A-0 565 364, EP-A-O 697 010, EP-A-0 742 780, WO-A-96/14270, WO-A-96/34828 and WO-A- 97/06102. The zeolite P described in EP-A-O 384 070 has the empirical formula given above in which M represents an alkali metal and x has a value up to 2.66, preferably in the range 1.8 to 2.66, and has a structure which is particularly useful in the present invention.

The preferred amount of the salt of a second metal used to prepare mixtures used in the invention depends upon a number of factors, such as the actual second metal selected, the actual crystalline aluminosilicate chosen and the desired effect to be achieved (in particular, the desired pH of the slurry). Useful mixtures contain an amount of second metal salt sufficient to replace from 3.0 to 30 per cent by weight of first metal, and, more preferably, from 3.0 to 20 per cent by weight of the first metal.

The appropriate amount of salt of a second metal in the mixture used in the invention, expressed in grams, depends upon the composition of the zeolite and the charge on the second metal but is readily calculated by a skilled person. For example, a zeolite having the empirical formula

Na₂O · Al₂O₃ · 2SiO₂

(anhydrous type A zeolite) contains 16.2 g of Na per 100 g of zeolite. An aluminium ion is capable of replacing three sodium ions. Hence, making allowance for the atomic weights of sodium and aluminium, it can be calculated that a mixture containing 100 g of anhydrous zeolite A and 0.317 g Al in the form of a suitable salt is a mixture suitable for use in the invention and containing sufficient salt of a second metal (i.e. aluminium) to replace 5 percent by weight of the first metal moiety (i.e. sodium).

It has been observed that a salt of a second metal wherein the ion of the second metal has a relatively small size or a relatively high charge is more effective as a means of controlling the pH of the zeolite slurry. Consequently, the effect of the metal salt on the pH of the slurry is more marked when the salt of a second metal is a salt of aluminium than when it is a salt of magnesium and the effect is more marked for salts of magnesium than for salts of zinc. The preferred second metals for use in the invention are aluminium, zirconium and tin.

Slurries useful in the paper industry preferably have an approximately neutral pH. Particularly useful slurries of this invention contain an amount of the second metal which is sufficient to produce a slurry having a pH in the range 6 to 9, preferably in the range 7 to 9.

The particle size of the crystalline aluminosilicates used in the slurries of this invention is adjusted to suit the intended use. Typically, the volume average particle size will be greater than 0.1 µm and, usually, less than 20 µm. More preferably, the crystalline aluminosilicates will have a volume average particle size in the range 0.5 to 10 µm. For use as a filler for papers, the crystalline aluminosilicate preferably has a volume average particle size in the range 1 to 5 µm.

Various methods of assessing particle size are known and all give slightly different results. In the present invention, a size distribution is obtained by light scattering from particles dispersed by ultrasound in demineralised water using a Malvern Mastersizer^{®}. The volume average particle size is the average particle size at 50 per cent cumulative volume as determined from the distribution.

The amount of crystalline aluminosilicate, expressed as dry weight of aluminosilicate present in the slurry is usually above 20 per cent by weight and often above 30 per cent by weight. The upper practical limit on the amount of aluminosilicate in the slurry will depend upon the viscosity of the slurry, which is likely to be too high for use in many applications when more than 65 per cent dry weight of aluminosilicate is present. Generally, useful slurries consisting essentially of crystalline aluminosilicate, salt of a second metal, silica and water, according to this invention, will contain not more than 50 per cent by weight of aluminosilicate (on a dry basis). For the purposes of this invention dry aluminosilicate is considered to be aluminosilicate which has been heated at 105° C to constant weight.

The slurry of the invention contains a salt of a second metal as hereinbefore specified. Mixtures of more than one salt of a second metal (as defined) or salts of more than one second metal (as defined) can be used. Suitable salts include halides, such as chlorides (e.g. stannic chloride), nitrates, and, preferably, sulphates (e.g. aluminium sulphate, magnesium sulphate, zinc sulphate or zirconium sulphate).

The slurry also contains silica having a BET surface area greater than 500 m²/g. Preferably the silica has a BET surface area greater than 600 m²/g. Usually the surface area is less than 1200 m²/g.

The silica also has a pore volume as measured by nitrogen manometry of less than 2.1 cm³/g. Preferably, the pore volume is less than 1.2 cm³/g.

Preferably, the silica is silica gel or a precipitated silica.

The silica preferably has a volume average particle size in the range 0.5 to 30 µm, as measured by Malvern Mastersizer^{®}. More preferably, the volume average particle size of the silica is in the range 2 to 15 µm.

The silica is preferably present in the slurry in an amount in the range 0.2 to 40 per cent by weight with respect to the dry weight of crystalline aluminosilicate. More preferably, the amount of silica present is in the range 0.5 to 15 per cent by weight with respect to dry weight of crystalline aluminosilicate and frequently, the amount of silica used is in the range 1.0 to 5.0 by weight with respect to dry weight of crystalline aluminosilicate.

The crystalline aluminosilicate used in the invention can be prepared by a conventional process. For example, a zeolite of type A can be prepared by mixing together sodium aluminate and sodium silicate at a temperature within the range of ambient temperature up to boiling point to form a gel, ageing the gel with stirring at a temperature usually in the range 70 to 95° C, separating the crystalline sodium aluminosilicate thus formed, washing, generally at a pH in the range 10 to 12.5, and drying. Zeolite of type P can be prepared by a similar process but zeolite type P formation is induced by the addition of type P seeds to the mixture of sodium aluminate and sodium silicate.

The slurry of the invention can be prepared in a number of ways. The crystalline aluminosilicate, salt of a second metal and water can be mixed in any order. A preferred method, however, comprises forming a solution of salt of a second metal at an appropriate concentration, adding the crystalline aluminosilicate with stirring and subsequently adding the silica, while the stirring is continued.

The following tests have been used in this invention.

### BET Surface Area and Pore Volume

Surface area of the silicas were measured using standard nitrogen adsorption methods of Brunauer, Emmett and Teller (BET) using a multi-point method with an ASAP 2400 apparatus supplied by Micromeritics of USA. The method is consistent with the paper by S. Brunauer, P.H. Emmett and E. Teller, J. Am. Chem. Soc., 60, 309 (1938). The pore volume was determined by a single point method as described in the operation manual for the ASAP 2400 apparatus. Samples are outgassed under vacuum at 270° C for 1 hour before measurement at about -196° C.

### Volume average particle size

The volume average particle size of the silica is determined using a Malvern Mastersizer^{®} model S, with a 300 RF lens and MS17 sample presentation unit. This instrument, made by Malvern Instruments, Malvern, Worcestershire uses the principle of Fraunhofer diffraction, utilising a low power He/Ne laser. Before measurement the sample is dispersed ultrasonically at 25 W ultrasound power in demineralised water for 5 minutes to form an aqueous suspension. The Malvern Mastersizer^{®} measures the volume particle size distribution of the silica. The volume average particle size (d₅₀) or 50 percentile is easily obtained from the data generated by the instrument. Other percentiles, such as the 90 percentile (d₉₀), are readily obtained.

The invention is illustrated by the following non-limiting examples.

### EXAMPLES

### Example 1

Three 100g slurries were prepared with the compositions given in Table 1 below.

**TABLE 1**

| **Sample** | **A** | **B** | **C** |
|---|---|---|---|
| Demineralised Water | 57.8 | 57.8 | 57.8 |
| Al₂(SO₄)_{3.}14 H₂O | 1.7 | 1.7 | 1.7 |
| Zeolite A24 (water content 7.03% by drying at 105° C) | 40.5 | 39.5 | 0 |
| Zeolite A28 (water content 13.35% by drying at 105° C) | 0 | 0 | 39.5 |
| Silica | 0 | 1.0 | 1.0 |

| | | | |
|---|---|---|---|
| The amounts given above are parts by weight. Zeolite A24 is a P type zeolite sold by INEOS Silicas Limited under the trade mark Doucil A24. It had a volume average particle size as measured by Malvern Mastersizer^{®} of 1.5 µm. Zeolite A28 is a P type zeolite sold by INEOS Silicas Limited under the trade mark Doucil A28. It had a volume average particle size as measured by Malvern Mastersizer^{®} of 2.8 µm. The silica was a silica gel sold by INEOS Silicas Limited under the Trade Name Sorbosil AC30. It had a volume average particle size of 7.9 µm, a pore volume to nitrogen of 0.39 cm³g⁻¹ and BET surface area of 725 m²g⁻¹. | | | |

Three small portions were taken from each of the slurries immediately after preparation and the rheological properties of the remaining slurries were determined using a Mettler Toledo RM 180 Rheomat rheometer, at 22 ± 1° C, with a Mooney cup and bob geometry. The samples were shaken by hand prior to measurement but were not sheared vigorously. The rheometer programme consisted of shearing the sample at a set shear rate for 30 seconds, after which a shear stress measurement was taken at that shear rate. Measurements were taken at 10, 20, 30, 40, 60, 100, 200, 350 and 500 s⁻¹. The rheological properties of the small portions were similarly measured at 4 days, 24 days and 60 days after the slurries were prepared.

Sample A, initially and after storage, had a much higher viscosity than the other samples at all the measured shear rates. Importantly, the viscosity at low shear for Samples B and C was much lower than for Sample A. This is illustrated by the results for viscosity at a shear rate of 20 s⁻¹ shown in Table 2 below.

**TABLE 2**

| **Sample** | | **A** | **B** | **C** |
|---|---|---|---|---|
| Viscosity at 20 s⁻¹ (Pa s) | Initially | 0.55 | 0.06 | 0.02 |
| | After 4 days | 0.58 | 0.06 | 0.10 |
| | After 24 days | 0.62 | 0.15 | 0.07 |
| | After 60 days | 0.69 | 0.25 | 0.12 |

All stock slurries showed a very slight sedimentation within 1 day, but this did not change on storage over 2 months.

Material similar to Sample A was stored in a large tank and it was found that it was difficult to satisfactorily discharge the bulk of the material from the tank. In contrast, material similar to Sample B was readily discharged from a tank after storage, leaving only a minimal heel.

### Example 2

100g slurries were prepared with the compositions given in Table 3 below.

**TABLE 3**

| **Sample** | **D** | **E** | **F** |
|---|---|---|---|
| Demineralised Water | 58.0 | 57.6 | 57.6 |
| Al₂(SO₄)₃.14 H₂O | 1.5 | 1.5 | 1.5 |
| Zeolite A24 (water content 7.03% by heating at 105° C) | 40.5 | 40.2 | 40.2 |
| Silica - Sorbosil AC30 | - | 0.7 | - |
| Silica - Gasil^{™} GM2 | - | - | 0.7 |

| | | | |
|---|---|---|---|
| The amounts given above are parts by weight. The zeolite and silica (Sorbosil AC30) were as used in Example 1. Gasil^{™} GM2 was a silica gel sold by INEOS Silicas Limited having a volume average particle size of 7.3 µm, a pore volume to nitrogen of 0.37 cm³g⁻¹ and a BET surface area of 691 m²g⁻¹. | | | |

The rheology profiles were measured as described in Example 1 on the samples 24 hours after preparation. The profiles of E and F were essentially similar to the profiles of Samples B and C, with Sample D being similar to Sample A. The viscosities at 20 s⁻¹ were as follows:

| | |
|---|---|
| Sample D | 0.54 Pa s |
| Sample E | 0.01 Pa s |
| Sample F | 0.01 Pa s. |

### Example 3

1 Kg slurries were prepared with the compositions in Table 4

**TABLE 4**

| **Sample** | **G** | **H** | **I** | **J** |
|---|---|---|---|---|
| Demineralised Water | 589.39 | 592.86 | 590.78 | 578.52 |
| Second metal salt | 15.91 | 12.44 | 14.52 | 26.78 |
| Zeolite A24 (water content 3.6% by heating at 105° C) | 387.7 | 387.7 | 387.7 | 387.7 |
| Silica - Sorbosil AC30 | 7 | 7 | 7 | 7 |

| | | | | |
|---|---|---|---|---|
| The amounts given above are parts by weight. The zeolite was as used in Example 1 except that the loss at 105 degrees C for the A24 zeolite was 3.6%. The Sorbosil AC30 used in this Example had a volume average particle size of 8.1 µm, a pore volume to nitrogen of 0.40 cm³g⁻¹ and BET surface area of 724 m²g⁻¹. | | | | |

The metal salt employed in each sample was as follows:
Sample G: Al₂(SO₄)₃.16 H₂O
Sample H: MgSO₄.7 H₂O
Sample I: ZnSO₄.7 H₂O
Sample J: Zr(SO₄)₂ solution

All of the salts were added as a solid except zirconium sulphate which was added as a 53.4 wt% solution, the amount of zirconium in this solution being determined using ICP atomic emission spectroscopy. The concentration of the metal cation coming from the added salt is the same in all slurries.

In addition to the above samples, 1 Kg slurries were prepared as specified in Table 4 except that the silica was omitted with corresponding adjustment of the demineralised water content - these are referred to below as samples Gc, Hc, Ic and Jc.

Viscosity results (in Pa s) at a shear rate of 20 s⁻¹, obtained using the procedure described in example 1, are shown in Table 5 below for 4 days and 14 days (where available) after preparation of the slurries referred to above.

**TABLE 5**

| **Sample** | **G** | **Gc** | **H** | **Hc** | **I** | **Ic** | **J** | **Jc** |
|---|---|---|---|---|---|---|---|---|
| 4 days | 0.06 | 0.40 | 0.07 | 0.34 | 0.02 | 0.31 | 0.04 | 0.36 |
| 14 days | 0.14 | 0.42 | 0.08 | 0.42 | - | - | - | - |

## Claims

1. An aqueous slurry comprising
(a) a crystalline aluminosilicate represented by the empirical formula
M_{2/n} O · Al₂O₃ · xSiO₂ · yH₂O
wherein M represents a first metal moiety, said first metal having a valency of n. x indicates the ratio of molecules of silica to molecules of alumina and y indicates the ratio of molecules of water to molecules of alumina wherein x is in the range of 1.5 to 10 and y is from 0 up to 5.
(b) a salt of a second metal selected from the group consisting of Group III metals, metallic elements of Group IV, magnesium, titanium, chromium, iron, nickel, copper, zinc, zirconium and silver, said salt of a second metal being present in an amount which is sufficient to replace from about 2.0 to about 40 per cent by weight of the first metal moiety, and
(c) particulate silica having a BET surface area greater than 500 m³/g and a pore volume, as measured by nitrogen manometry of less that 2.1 cm³/g.

2. An aqueous slurry according to claim 1 **characterised in that** M is an alkali metal.

3. An aqueous slurry according to 1 claim **characterised in that** M is sodium.

4. An aqueous slurry according to any preceding claim **characterised in that** the crystalline aluminosilicate is a zeolite P, zeolite A or zeolite X.

5. An aqueous slurry according to any one of the preceding claims **characterised in that** the second metal is aluminium, zirconium or tin.

6. An aqueous slurry according to any one of the preceding claims **characterised in that** it has a pH in the range 6 to 9.

7. An aqueous slurry according to any one of the preceding claims **characterised in that** the crystalline aluminosilicate has a volume average particle size in the range 0.1 to 20 µm.

8. An aqueous slurry according to any one of the preceding claims, **characterised in that** the amount of crystalline aluminosilicate present in the slurry is in the range 20 to 50 per cent by weight calculated as dry aluminosilicate.

9. An aqueous slurry according to any one of the preceding claims **characterised in that** the silica has a BET surface area greater than 600 m²/g.

10. An aqueous slurry according to any one of the preceding claims **characterised in that** the silica has a pore volume of less than 1.2 cm³/g.

11. An aqueous slurry according to any one of the preceding claims **characterised in that** the silica has a volume average particle size in the range 0.5 to 30 µm.

12. An aqueous slurry according to any one of the preceding claims **characterised in that** the amount of silica present in the slurry is in the range 0.2 to 40 per cent by weight with respect to dry weight of crystalline aluminosilicate present.

13. An aqueous slurry according to any one of the preceding claims in which the metal salt is a halide, a nitrate or a sulphate.

## Patentansprüche

1. Wässrige Aufschlämmung umfassend
(a) ein kristallines Aluminosilicat, das durch die empirische Formel
M_{2/n}O · Al₂O₃ · xSiO₂ · yH₂O
dargestellt ist, wobei M einen ersten Metallanteil darstellt, wobei das erste Metall eine Wertigkeit von n aufweist, x das Verhältnis von Molekülen von Siliciumdioxid zu Molekülen von Aluminiumoxid anzeigt und y das Verhältnis von Molekülen von Wasser zu Molekülen von Aluminiumoxid anzeigt, wobei x im Bereich von 1,5 bis 10 liegt und y 0 bis zu 5 beträgt,
(b) ein Salz eines zweiten Metalls ausgewählt aus der Gruppe bestehend aus Metallen der Gruppe III, Metallelementen der Gruppe IV, Magnesium, Titan, Chrom, Eisen, Nickel, Kupfer, Zink, Zirconium und Silber, wobei das Salz eines zweiten Metalls in einer Menge vorliegt, die ausreicht, um etwa 2,0 bis etwa 40 Gewichtsprozent des ersten Metallanteils zu ersetzen, und
(c) teilchenförmiges Siliciumdioxid, das einen BET-Oberflächenbereich von mehr als 500 m²/g und ein Porenvolumen, wie durch Stickstoffmanometrie gemessen, von weniger als 2,1 cm³/g aufweist.

2. Wässrige Aufschlämmung nach Anspruch 1, **dadurch gekennzeichnet, dass** M ein Alkalimetall ist.

3. Wässrige Aufschlämmung nach Anspruch 1, **dadurch gekennzeichnet, dass** M Natrium ist.

4. Wässrige Aufschlämmung nach einem der vorhergehenden Ansprüche, **dadurch gekennzeichnet, dass** das kristalline Aluminosilicat ein Zeolith P, Zeolith A oder Zeolith X ist

5. Wässrige Aufschlämmung nach einem der vorhergehenden Ansprüche, **dadurch gekennzeichnet, dass** das zweite Metall Aluminium, Zirkonium oder Zinn ist.

6. Wässrige Aufschlämmung nach einem der vorhergehenden Ansprüche, **dadurch gekennzeichnet, dass** sie einen pH-Wert im Bereich von 6 bis 9 aufweist.

7. Wässrige Aufschlämmung nach einem der vorhergehenden Ansprüche, **dadurch gekennzeichnet, dass** das kristalline Aluminosilicat eine volumendurchschnittliche Teilchengröße im Bereich von 0,1 bis 20 µm aufweist.

8. Wässrige Aufschlämmung nach einem der vorhergehenden Ansprüche, **dadurch gekennzeichnet, dass** die Menge des kristallinen Aluminosilicats, das in der Aufschlämmung vorliegt, im Bereich von 20 bis 50 Gewichtsprozent, als trockenes Aluminosilicat berechnet, liegt.

9. Wässrige Aufschlämmung nach einem der vorhergehenden Ansprüche, **dadurch gekennzeichnet, dass** das Siliciumdioxid einen BET-Oberflächenbereich von mehr als 600 m²/g aufweist.

10. Wässrige Aufschlämmung nach einem der vorhergehenden Ansprüche, **dadurch gekennzeichnet, dass** das Siliciumdioxid ein Porenvolumen von weniger als 1,2 cm³/g aufweist.

11. Wässrige Aufschlämmung nach einem der vorhergehenden Ansprüche, **dadurch gekennzeichnet, dass** das Siliciumdioxid eine volumendurchschnittliche Teilchengröße im Bereich von 0,5 bis 30 µm aufweist.

12. Wässrige Aufschlämmung nach einem der vorhergehenden Ansprüche, **dadurch gekennzeichnet, dass** die Menge an Siliciumdioxid, die in der Aufschlämmung vorliegt, im Bereich von 0,2 bis 40 Prozent, Gewichtsprozent mit Bezug auf das Trockengewicht des vorliegenden kristallinen Aluminosilicats liegt.

13. Wässrige Aufschlämmung nach einem der vorhergehenden Ansprüche, wobei das Metallsalz ein Halogenid, ein Nitrat oder ein Sulfat ist.

## Revendications

1. Suspension aqueuse comprenant
(a) un aluminosilicate cristallin représenté par la formule empirique
M_{2/n}O·Al₂O₃·xSiO₂·yH₂O
dans laquelle M représente une première fraction métallique, ledit premier métal ayant une valence de n, x indiquant le rapport des molécules de silice aux molécules d'alumine et y indiquant le rapport des molécules d'eau aux molécules d'alumine, dans laquelle x se situe dans la plage de 1,5 à 10 et y est de 0 jusqu'à 5.
(b) un sel d'un second métal choisi parmi le groupe constitué des métaux du groupe III, des éléments métalliques du groupe IV, du magnésium, du titane, du chrome, du fer, du nickel, du cuivre, du zinc, du zirconium et de l'argent, ledit sel d'un second métal étant présent en une quantité qui est suffisante pour remplacer d'environ 2,0 à environ 40 pour cent en poids de la première fraction métallique, et
(c) de la silice sous forme de particules ayant une surface spécifique BET supérieure à 500 m²/g et un volume de pore, tel que mesuré par manométrie à l'azote inférieur à 2,1 cm³/g.

2. Suspension aqueuse selon la revendication 1, **caractérisée en ce que** M est un métal alcalin.

3. Suspension aqueuse selon la revendication 1, **caractérisée en ce que** M est du sodium.

4. Suspension aqueuse selon l'une quelconque des revendications précédentes, **caractérisée en ce que** l'aluminosilicate cristallin est une zéolite P, une zéolite A ou une zéolite X.

5. Suspension aqueuse selon l'une quelconque des revendications précédentes, **caractérisée en ce que** le second métal est l'aluminium, le zirconium ou l'étain.

6. Suspension aqueuse selon l'une quelconque des revendications précédentes, **caractérisée en ce qu'**elle a un pH situé dans la plage de 6 à 9.

7. Suspension aqueuse selon l'une quelconque des revendications précédentes, **caractérisée en ce que** l'aluminosilicate cristallin a une taille de particule moyenne en volume située dans la plage de 0,1 à 20 µm.

8. Suspension aqueuse selon l'une quelconque des revendications précédentes, **caractérisée en ce que** la quantité d'aluminosilicate cristallin présent dans la suspension se situe dans la plage de 20 à 50 pour cent en poids calculée en aluminosilicate sec.

9. Suspension aqueuse selon l'une quelconque des revendications précédentes, **caractérisée en ce que** la silice a une surface spécifique BET supérieure à 600 m²/g.

10. Suspension aqueuse selon l'une quelconque des revendications précédentes, **caractérisée en ce que** la silice a un volume de pore inférieur à 1,2 cm³/g.

11. Suspension aqueuse selon l'une quelconque des revendications précédentes, **caractérisée en ce que** la silice a une taille de particule moyenne en volume située dans la plage de 0,5 à 30 µm.

12. Suspension aqueuse selon l'une quelconque des revendications précédentes, **caractérisée en ce que** la quantité de silice présente dans la suspension se situe dans la plage de 0,2 40 pour cent en poids par rapport au poids sec de l'aluminosilicate cristallin présent.

13. Suspension aqueuse selon l'une quelconque des revendications précédentes, dans laquelle le sel métallique est un halogénure, un nitrate ou un sulfate.
